# EUROPEAN PATENT SPECIFICATION

(11) **EP 4 402 651 B1**
(45) Date of publication and mention of the grant of the patent: **04.11.2026**
(21) Application number: 22783324.1
(22) Date of filing: 13.09.2022
(51) Int. Cl.: G06V 20/13, G06V 20/10, G06T 7/00

(54) **INTELLIGENT DECISION-MAKING SYSTEM AND METHOD BASED ON AGRICULTURAL FIELD VARIABILITIES**
INTELLIGENTES ENTSCHEIDUNGSSYSTEM UND VERFAHREN AUF DER BASIS VON LANDWIRTSCHAFTLICHEN FELDVARIABILITÄTEN
SYSTÈME ET PROCÉDÉ DE PRISE DE DÉCISION INTELLIGENTE BASÉE SUR UN CHAMP AGRICOLE

(30) Priority: 13.09.2021 GB 202113019
(43) Date of publication of application: 24.07.2024
(73) Proprietor: University College Dublin, Belfield, Dublin 4 (IE)
(72) Inventor: KULATUNGA, Dr. Chamil, Naas Kildare (IE); KECHADI, Prof. Tahar, Dublin (IE)
(74) Representative: Purdylucey Intellectual Property
(86) International application number: PCT/EP2022/075462
(87) International publication number: WO 2023/037019

(56) References cited:
- CN-A- 111 507 832
- US-A1- 2019 043 142
- FENG LUWEI ET AL: "Geographically and temporally weighted neural network for winter wheat yield prediction", REMOTE SENSING OF ENVIRONMENT, ELSEVIER, XX, vol. 262, 24 May 2021 (2021-05-24), XP086613754, ISSN: 0034-4257, [retrieved on 20210524], DOI: 10.1016/J.RSE.2021.112514
- EVANS FIONA H. ET AL: "Assessment of the Use of Geographically Weighted Regression for Analysis of Large On-Farm Experiments and Implications for Practical Application", AGRONOMY, vol. 10, no. 11, 5 November 2020 (2020-11-05), XP055920798, DOI: 10.3390/agronomy10111720

## Description

### Field

The present disclosure relates to a method and system for the conflation of multiple spatial data layers of agricultural crop data to delineate the spatial yield potential of any field and for obtaining actionable, in-season insights into within-field spatial variability.

### Background

While precision agriculture currently permits the efficient management of agricultural fields at the sub-field level using management zones. There is a need for methods to improve this and to provide more economically efficient and environmentally sustainable approaches for agri-inputs such as fertilizers, pesticides, and other inputs.

Currently, the remote sensing images from satellites have proven to be useful for crop vigour-based zoning. These images contain various spectral bands and vegetative indices such as NDVI or GCI. These images, along with other data such as topography, soil analysis and electrical conductivity scanning, can help create dynamic zones, which, in turn, are used for Variable Rate Applications (VRA). Such images may also be conflated with other spatial data sets to reveal changes that have occurred or are occurring in portions of a field. Thus, the development of spatial data layers permits a good understanding of spatial variability and the creation of management zones at the sub-field level and associated digital maps for variable rate applications of agri-inputs. Such systems are known from e.g. US 2019/043142 A1.

Identifying spatial variability in a field is of great value in optimising crop economics and environmental impact. Such variability may occur across many years of planting the same crop or the entire crop rotation cycle (with other crops) for a given field. It may comprise areas which consistently underperform or overperform or areas which show instability. Thus, data analytic methods have great potential to gain insights into the historical variability of a given field. This approach allows farmers and agronomists to make management decisions for future nutrient planning and farming practices. In addition, spatial data analysis techniques may also find real-time applications during the growing season, identifying underperforming or anomalous areas (historical or incidental), and trigger interventions where possible. Such methods will facilitate an understanding of the yield potential of each area of a field so that the farmer can reduce the production costs and environmental impact. Such systems would allow the right product to be delivered at the right place and time.

Thus there is a need for the technologies that can be used in a range of applications, including nitrogen fertilizer and other nutrients or micronutrients, growth regulators and other agri-inputs delivered by Variable Rate Applications (VRA), analysis of historical performance and determination of spatial yield potential to crop or not to crop. Moreover, this technologies could help create novel methods for VRA zones, which are more efficient to deploy. Such application of the above technology is in nitrogen fertiliser.

Optimising fertiliser applications (mainly N) is an area of great unmet need. Any loss of nitrogen from an agricultural field leads to an adverse economic effect on farmers. Nitrogen loss also harms the environment since it significantly impacts soil, air, and water bodies. Farmers apply nitrogen proactively and uniformly, expecting high yield. However, overuse of nitrogen in stable low-yield areas is equally disadvantageous as the underuse of nitrogen in high-yield areas. And the use of nitrogen in unstable areas should be a dynamic decision based on crop monitoring, which includes the near-term N demand given forecasted weather conditions. Variable rate application of nitrogen-based on dynamically delineated management zones in an agricultural farm is highly beneficial for farming. In addition, for improved planning for N applications, such spatial methods provide, during the growing season, an early identification of areas of a crop which have not responded well to N applications, thus permitting investigation of the cause and allowing a decision to be made quickly.

Conventional multivariate approaches for delineation of management zones are mostly based on linear statistical methods.

A pattern recognition-based approach called Multi-Temporal Yield Pattern Analysis (MYPA) using Principal Component Analysis (PCA) is well documented in the literature. This approach can identify productive and stable regions by stacking historical yield maps from at least ten years. PCA is used to identify patterns in similarities and differences of normalised multi-year yields, and productively stable regions which are coherent, easy to manage, and delineated based on fuzzy k-means clustering. The zonal opportunity index is used to determine the optimal number of management zones. This method, however, does not take spatial autocorrelation into account and therefore has limitations in capturing spatial and temporal relationships.

Another existing method uses factorial co-kriging as the first regionalised factor to delineate homogeneous management zones as three iso-frequency classes and uses polygon kriging to finalise regions as stable zones. This method considers the spatial autocorrelation of in-field variations of multiple variables, such as soil organic matter, reactive nitrogen, field capacity, wilting point, clay, and sand, and uses co-kriging as a robust multi-variate geostatistical technique that uses a weighting function with geo-coordinates. This method however does not use a regression-based model and does not quantify the local influence of each factor at a point, and hence is not capable of employing multiple explanatory variables. Therefore, it allows only minimal interpretability of each variable.

Vegetation index-based crop vigour monitoring applications, for example, NDVI or Green Chlorophyll Vegetation Index (GCI) based crop vigour monitoring applications, are widely used with remote and proximal sensing technologies, to delineate management zones in agricultural fields.

Decision support systems using yield mapping technologies are also known in the art. However, presently, the use of yield maps has been limited to visualise certain issues within a harvesting year and for descriptive analytics. Such issues sometimes known to farmers/agronomists have very little prescriptive information. Unknown issues or issues which are difficult to visualise from a single map cannot be ascertained from the use of yield maps, without conducting invasive and expensive on-field testing. Further, since variable rate application of fertilisers/seeds and localised management of diseases/tillage are becoming highly popular, there is a need for more prescriptive maps for site-specific management practices.

However, NDVI/GCI application data are analysed with simple clustering techniques to detect changes and variable rate nitrogen applications, and therefore such applications depend on individual manipulations of different layers of data in a field to identify site-specific management zones. More importantly, most existing univariate clustering techniques do not achieve spatial contiguity of infield variabilities. Further, systems that do not use multivariate geostatistical techniques are less intelligent in relation to combining past and present data to make decisions. Hence, delineation of management zones using known systems and methods is less accurate and more time-consuming.

Another drawback of the existing systems is that their accuracy is not usually known. There is no accepted optimisation process which quantitatively assesses how good or bad a delineation is. This is of particular importance since in most of the existing systems for spatial data analysis the user defines the weightings, but this is arbitrary and does not provide any method for assessing how important a data layer is in relation to a key parameter such as yield or current crop growth.

Further, identification of historically persistent underperforming issues is not automatically integrated into the existing systems for delineation of management zones for nitrogen fertilisation or other precision agricultural applications.

Another method known in the art is that revealed by US 2019/043142A1, which is directed at improving VRA applications, but it is based on the conflation of historic NDVI images over a growing cycle to obtain average NDVI values per point. Said document uses a different approach to the identification of in season anomalies and furthermore does not take account of historic yield frequency maps and does not provide methods to delineating spatial yield potential. Said document is not directed towards identifying spatial yield potential that is areas of historic under and over-performance as well as variable yield performance for the purpose of nutrient planning and for the purposes of investigation of problem areas by agronomists and farmers.

Further, there are a range of areas, where growers involved in precision agriculture need better digital tools to support decision making based on within field variabilities. The first, and one of the biggest issues is that current soil-based management zones (known as farming by soil) do not map fully onto spatial yield potential. A better understanding of how to do that and how to create yield potential zones (farming by yield) would be very advantageous for managing agri-inputs more efficiently and optimising yields. Such capabilities would therefore feed into improved nutrient and spatial planning decisions and targeted scouting and identification of areas which need differential treatments. But as well as planning, there is also a need for improved in-season decision support depending on crop performance, the weather and soil. Currently some solutions exist for the conflation and analysis of different primary data layers but relies on arbitrary and spatially invariant data layer weightings (global) and is not capable of automatically identifying the optimum combination of data layers and their relative weightings (local) in order to derive the most valuable actionable insights.

There is therefore an unresolved and unfulfilled need for a method and system which enable delineating management zones with persistent issues or incidental issues based on localised regression parameters, for variable rate applications.

### Summary of Invention

The present invention, as set out in the appended claims, provides a computing device and enabled method for the spatial analysis of field variability and for dynamically delineating management zones in agricultural fields for any variable rate application by combining in one embodiment, a historical yield frequency map for one or more set of spatially contiguous regions with a plurality of Normalized Difference Vegetation Index (NDVI) maps of the regions from an ongoing cropping season, using multivariate geostatistical techniques.

In a preferred embodiment of the present invention, a method for delineating a plurality of management zones in an agricultural field for VRA is provided. The method comprises the steps of identifying at least one set of spatially contiguous regions within the field and generating a historical yield frequency map for the identified set of spatially contiguous regions by cascading a plurality of yield maps of the regions from a plurality of prior consecutive years. The set of spatially contiguous regions is identified by removing one or more erroneous data points from the plurality of yield maps, calculating a normalised yield score for each data point in the yield maps, removing one or more outlier data points with normalised yield score lesser than a predetermined threshold value, ordering the data points in the yield maps based on their respective timestamps and removing time-series outliers, and smoothing and interpolating the ordered data points in a uniformly spaced base grid, wherein the grid is defined based on the boundary map of the field.

Two or more consecutive NDVI maps of the set of regions, are captured over a predetermined timeframe in an ongoing cropping season. The generated historical yield frequency map and the captured NDVI maps are combined by applying a multivariate geostatistical model which has the latest NDVI map as the response variable, and the NDVI maps captured prior to the latest NDVI map and the historical yield frequency map as the explanatory variables. The local contribution of each explanatory variable, that is the parameter surface for each explanatory variable is identified and based on this, the crop growth deviation in each region is mapped to either of a plurality of persistent issues or a plurality of incidental issues. A prescription map for nitrogen fertilisation is generated based on the issues identified for each region and also as informed by crop type and other relevant parameters.

In a preferred embodiment of the present invention, a system for spatial data analysis and identification of sub-field variability for decision support is provided. The system consists of a computing device and a non-transitory memory means operably coupled to the computing device. The memory means has a number of instructions stored thereon which configures the computing device to identify at least one set of spatially contiguous regions within the field; generate a historical yield frequency map for the set of regions by cascading a plurality of cleaned yield maps of the identified set of regions from a plurality of prior consecutive cropping season; combine the yield frequency map with two or more consecutive NDVI maps of the identified set of regions captured over a predetermined timeframe in an ongoing cropping season by applying a multivariate geostatistical model to generate a clustering image referred to as spatially varying co-efficient (SVC) map, wherein the model has the latest captured NDVI map as the response variable, and the NDVI maps captured prior to the latest captured NDVI map and the yield frequency map as the explanatory variables; identify a parameter surface for each explanatory variable for each region; map crop growth deviation in each region to either of a plurality of persistent issues or a plurality of incidental issues, based on the parameter surface for each explanatory variable for each region; and generate a prescription map for variable rate application for each region.

In an embodiment of the present invention, the method further includes generating the historical yield frequency map for delineating spatial yield potential of the field based on a clustering technique, wherein the historical yield frequency map illustrates areas of stable low yield, stable high yield, and unstable variable yield.

In an embodiment of the present invention, the multivariate geostatistical model is a Geographically Weighted Regression (GWR) model which accounts for spatial autocorrelation and non-stationarity of variables.

In an embodiment of the present invention, the GWR model is used with a fixed bandwidth setting gaussian-shaped spatial kernel and golden-search algorithm which enables determination of the optimal bandwidth of an agricultural field.

In an embodiment of the present invention, the explanatory variable to the model comprises the NDVI maps captured prior to the latest captured NDVI map, the yield frequency map (optionally a plurality of elevation/slope/curvature maps, and a plurality of soil texture maps).

In an embodiment of the present invention, the predetermined threshold value for normalised yield score is three times the standard deviation (3).

In an embodiment of the present invention, the grid is a (10 x 10) meter (0.01 Ha) square grid.

The present invention takes spatial and temporal correlations of multivariate data into account for management zone delineation. The GWR model quantifies the localised influence of each factor at each region precisely for each point in the region. This enables determination of the underlying reason for crop growth deviations in each region and attribution of such deviations to either of persistent issues such as soil or topographical properties or incidental due to an ongoing issue which when used with available NDVI data, enables capturing of spatial and temporal changes in crop growth patterns in each region.

The present invention therefore enables identification of long-term trends in persistent issues, such as soil compaction, or waterlogging, from change in values of the explanatory variables with time and indicates the spatial and temporal influence of different factors on crop growth in the region thereby providing valuable inputs for variable rate nitrogen application. The present invention hence would be important tool for decision support for farmers and agronomists. In another embodiment of the present invention, the system may be used to analyse historic performance for a single crop across multiple years and to compare spatial performance between crops in the crop rotation cycle.

In another embodiment of the present invention, the system may be used to analyse the spatial variability of a field across multiple crop types. This analysis is of a particular value in identifying problem areas of a field due to such factors as drainage.

In another embodiment of the present invention, the system may be used to analyse unexplained areas of variability across the entire crop rotation cycle or across multiple years for a single crop. Such unexplained variability holds considerable potential for being able to identify yield-limiting factors. These yield-limiting factors may then be utilised for management decisions to optimise yield.

In another embodiment of the present invention, the system may be used to delineate spatial yield potential for a field by using the Moran's LISA clustering technique wherein yield frequency maps may be generated which show areas of stable low yield, stable high yield, and unstable variable yield. This information may then be used as a valuable input into nutrient planning and VRA prescriptions. It may also be used as the basis for agronomic investigations into an improvement of the potential of certain zones within a field. For example, an area which has stable low-yield may present opportunities for remediation and if so the value of such remediation activities may be analysed. Similarly variable yield areas may also be investigated and factors responsible for their variability identified. It may then be possible to move some of these areas into higher yield performance over time whether that be by alterations to soil index for key nutrients, addressing drainage or cropping methods.

In another embodiment, the Moran's cluster imaging may be conflated with the in-season analysis of NDVI or GCI or other spectral imaging in the Spatially Varying Coefficient (SVC) analysis as described herein. In such an approach, the use of successive NDVI images which identifies potential in-season growth problems is conflated with the normalised yield frequency clustering map, so as to generate a map wherein for any point it can be seen whether the level of growth is occurring against or with the historical trend for that point. For example an area may shows strong growth currently which is in line with historical performance; it may show strong growth currently which is against historic performance at that area; it may show low current growth which is in line with historic performance, or it may show low current growth against historic performance. That last case is of particular interest in relation to potential interventions. Additionally, the automated creation of data layer weighting across the entire SVC surface allows for these effects to be quantified.

In another embodiment of the present invention, methods are provided for creating VRA zone maps without the need for expensive and often inaccurate soil sampling. In this method, the yield frequency map is conflated with a satellite derived soil brightness map of the naked soil and an EC map indicating soil moisture. Different patterns are delineated which reflect the relationships between soil variations and historic yield performance. These are then exported to GeoJSON format which in turn may be converted into Shape files which is the file format used to apply the VRA prescription in the tractor.

Various embodiments of the present invention employ two successive NDVI images, instead of a complete set of historic NDVI's, which are then combined with the normalised yield frequency map within a GWR model. The resulting clustering image is called the Spatially Varying Coefficient map. This shows areas that may not be performing well in season in real time so that remedial action may be taken. The SVC is in the form of a 'surface' at each point, which is described by a regression equation between the contribution of yield frequency (YF), and the contribution of NDVI-1 and NDVI-2. The beta coefficients of these regression equations show in quantitative manner, the influence of different factors above on the current yield performance as measured by the latest NDVI. Thus, for example an area may be showing poor current growth, but this may or may not be influenced to a large extent by the yield potential of that spot of land. The spatially varying soil characteristics may be used as additional data layers for clustering thus refining the use of the system for specific soil types and geographic regions.

In another embodiment, the present invention provides methods and systems whereby the weightings of different data layers in relation to yield may be automatically calculated in accordance with the regression equation which describes each point. Furthermore, the method provides a way in which data layers having no or negative correlation when combined with the yield map may be identified from the negative correlation coefficients obtained in such regressions.

In a further embodiment of the present invention, methods and systems are provided wherein new dynamic management zones can be created both before season for nutrient planning and in season for the modification of existing zones. The application of the above methods enables a new zone to be identified or created for given purposes within VRA. This may then be exported to other systems in the appropriate format and a new VRA map created for transfer to the tractor cab and instruction of the VRA machinery.

### Brief Description of Drawings

The present invention will be more clearly understood from the following description of an embodiment thereof, given by way of example only, with reference to the accompanying drawings, in which: -
Figure 1 is a flow diagram illustrating a method as per a preferred embodiment of the present invention;
Figure 2a illustrates a yield frequency map indicating historical yield potential of various regions within a field, as per a preferred embodiment of the present invention;
Figure 2b and Figure 2c illustrates NDVI maps of an agricultural field, as per a preferred embodiment of the present invention;
Figure 3a illustrates the predicted R² accuracy surface of a predicted NDVI map, as per a preferred embodiment of the present invention.
Figure 3b illustrates the parameter surfaces of explanatory variable NDVI₁ for a region in an agricultural field, as per a preferred embodiment of the present invention; and
Figure 3c illustrates the parameter surfaces of explanatory variable YF for a region in an agricultural field, as per a preferred embodiment of the present invention.

### Detailed Description of Drawings

The present invention relates to a method for delineating management zones in agricultural fields for variable rate applications and more particularly to a computing device enabled method for dynamically delineating management zones in agricultural fields for variable rate applications by combining a historical yield frequency map for one or more set of spatially contiguous regions with a plurality of Normalized Difference Vegetation Index (NDVI) maps of the regions from an ongoing cropping season, using multivariate geostatistical techniques.

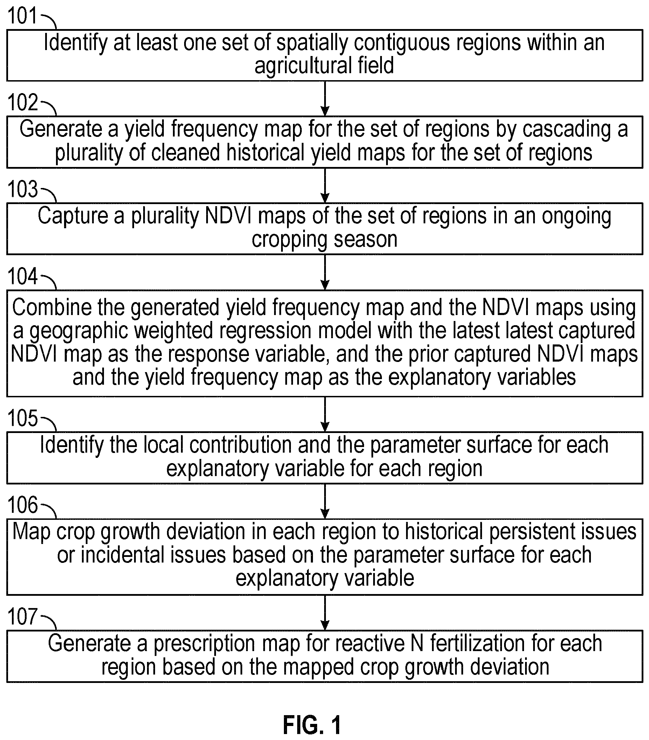

Referring to Figure 1, the method as per the present invention comprises the first step of identifying at least one set of spatially contiguous regions within the agricultural field 101 and generating a historical yield map for the set of regions by cascading a plurality of cleaned yield maps for the identified set of spatially contiguous regions from a plurality of prior consecutive cropping seasons 102. The set of spatially contiguous regions is identified by cleaning the yield maps and removing erroneous data points from each of the yield maps. Data processing steps such as data filtering, data smoothening, and removing outliers, are used to generate cleaned yield maps. Once the set of erroneous data points are removed from each of the yield maps, a moving average filter with a predefined window determined as per the length of the field, is used to smooth out the data dips at the edges of the agricultural field. In general, yield at the edges of an agricultural field is relatively low, and hence data points closer to the boundary of the field are excluded since the objective is to identify yield changing tendencies and not outliers. The max-min normalised yield score (-1 to +1) for each data point is then calculated, and data points with normalised yield less than a predetermined threshold value is removed. Negative scores are low yielding, scores around 0 is medium yielding or unstable, and scores higher greater than the predetermined threshold value is high yielding. The normalised yield score (z-score) at each point is calculated to avoid yearly changing crop rotation, weather influence and changing farm management practices.

In an embodiment of the present invention, the predefined score is three time the standard deviation (3).

The remaining data points in the yield maps are then ordered based on their respective timestamps. Further, the ordered data points are smoothened and interpolated in a uniformly spaced base grid, for example a (10 x 10) meter (0.01 Ha) square grid, wherein the grid is defined based on the boundary map of the field. The cleaned yield maps are then cascaded to generate the yield frequency map. The yield frequencies (YF) or the yield potential for each grid point in the map is generated by summing all the normalised yield scores. Variance is used as an indicator of the yield stability at a grid point. The historical yield frequency map is used to determine persistent issues such as poor soil physical properties, soil compaction, waterlogging, poor seed establishment etc., within regions in the field.

Thus, the normalised frequency map is a clustering generated map, and is a secondary data layer showing areas of high, low and medium yield for a crop's historical yield performance in any field. Using a more sophisticated type of clustering (Moran's LISA), it can generate a map showing areas of stable low crop yield, stable high crop yield and areas which are consistently unstable for yield by taking into account spatial autocorrelation. That can then direct scouting and further investigation. Areas which are low stable may have underlying reasons which can be investigated, and this information can then drive agri-input and VRA decisions. The areas which are unstable present also significant opportunity to investigate and improve consistent performance. This approach can thus visualise persistent problems in a field such as drainage, poor soil, soil compaction, waterlogging, poor seed establishment etc.

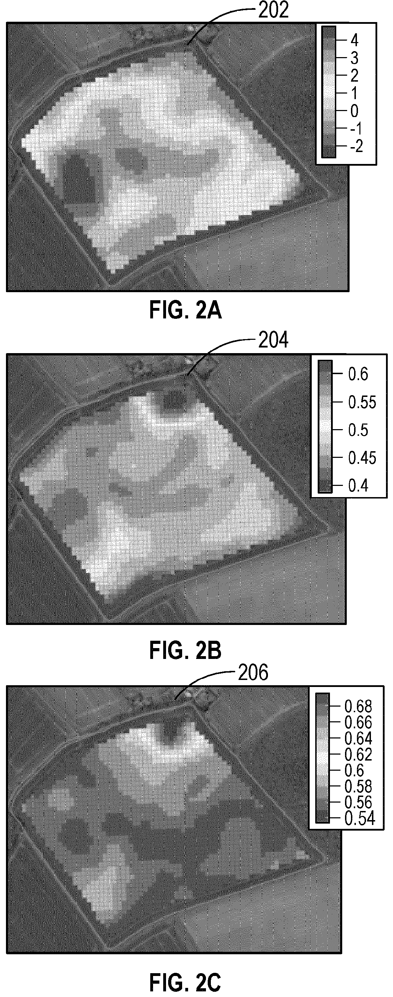

For example, Figure 2a illustrates a historical yield frequency map 200 indicating historical yield potential of various regions within a field. Regions with greyscale levels 4, 3, 2 and 1 in the map 200 exhibit high yield potential zones with high yield stability, regions with greyscale levels -1 and -2 indicate low yield potential with high stability, and regions with greyscale levels 0 and 1 indicate medium stable and unstable regions.

Further, in addition to the analysis of historical yield potential, methods are provided for timely season detection of problems to aid decision support and maximise yield. Here, two or more consecutive NDVI maps over a predetermined timeframe in an ongoing cropping season is captured 103. The NDVI maps reflects the change in crop vigour over a period of time. For example, Figure 2(b) and Figure 2(c) illustrate cloud-free NDVI maps 204 and 206 of an agricultural field wherein the NDVI map 204 captured on 2019-12-23 in Figure 2(b) was three months prior to the NDVI map 206 captured on 2020-03-22 in Figure 2(c). The historical yield frequency map, and the captured NDVI maps 204 and 206 are combined using a multivariate geostatistical model such as a Geographically Weighted Regression (GWR) model which accounts for spatial autocorrelation and non-stationarity of variables 104, to generate an output referred to as Spatially Varying Coefficient map (SVC).

In an embodiment of the present invention, the GWR model is used with a fixed bandwidth setting gaussian-shaped spatial kernel and golden-search algorithm which enables determination of the optimal bandwidth of an agricultural field.

The GWR model has the latest captured NDVI map as the response variable, and the NDVI maps captured prior to the latest captured NDVI map, and the historical yield frequency map, as the explanatory variables. Using the GWR model, a set of parameters is calculated for each coordinate point in the field. This can be mathematically illustrated as below: ${NDVI}_{2} = {β}_{0} + {β}_{1} {NDVI}_{1} + {β}_{2} YF$ (1)

NDVI₂ is the latest captured NDVI map and is the response variable, NDVI₁ is the NDVI map captured prior to NDVI₂, and YF is the historical yield frequency. NDVI₁ and YF are the explanatory variables.

If the regionalisation is looked across SVC map (i.e., major clustering areas) the regression coefficients may be used to ascertain important data. It is important to note that these beta coefficients (β₀, β₁, β₂) represent not simply global data layer weightings across the field but rather the weightings at each point and area across the field. For example, in one case, in one region of that map, β₁- β₂> 0.6 indicated that the growth was being driven currently by historical performance (be that high or low) while for another region β₁-β₂ < 0.3 showed that in this region growth is being driven against the historical performance.

The SVC map may be used for example to identify an area of a field not responding to N or other inputs during the season. The SVC may also be used to identify areas of the field which are growing with the historical trend (either a positive or negative trend) and areas which are growing against the historical trend (whether positive or negative trend). That timely information may also be used for decision support and identification of unexpected problems ( for example in an area which historically has always performed well).

In an embodiment of the present invention, in addition to the NDVI maps captured prior to the latest NDVI map and the historical yield frequency map, (optionally a plurality of elevation maps, and a plurality of soil texture maps), are used as explanatory variables. The system can be used beyond the area of yield frequency to derive a wide range of different combination of maps by conflating different primary data layers and deriving new secondary data layers. Thus, for example it can be used to provide clustering maps showing the spatial distribution of yield with slope or topographic wetness index under conditions of high or low rainfall conditions.

The above methods and algorithm may be extended by generating a map wherein there is a plurality of data layers (elevation/slope/curvature or soil texture, wetness index, precipitation) and the equation therefore extended to be ${NDVI}_{2} = {β}_{0} + {β}_{1} {NDVI}_{1} + {β}_{2} Slope … . {_β}_{n} \left(Z\right)$ (2)

These regression equations may apply at each point of the SVC surface. Thus a method is provided for identifying the importance of each parameter to the observed growth at that point. The value of this in practical terms is as follows. By interrogating the SVC image at any point, the coefficients of the top ranked parameters may be displayed. This is highly useful information for the farmer or agronomist before going in-field to investigate various anomalies or problems.

The local accuracies and the localised contribution from each explanatory variable, that is the parameter surface for each explanatory variable, is outputted as the result of the GWR model 105. Based on the parameter surface for each explanatory variable in each region, the crop growth deviation in each region is mapped to either a plurality of persistent issues or a plurality of incidental issues 106. Based on said mapping, a prescription map for nitrogen fertilisation or other applications for each region is generated 107.

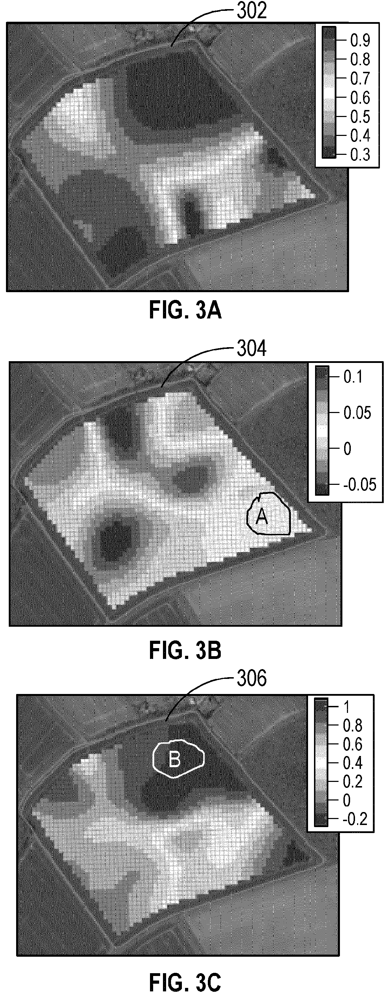

Figure 3a illustrates the predicted R² accuracy surface 302 of the predicted NDVI map, that is the R² accuracy surface of NDVI₂ in equation (1), as per an embodiment of the present invention.

Figure 3b illustrates the parameter surfaces 304 of explanatory variable NDVI₁ as per a regression equation NDVI₂ = 0.8 + 0.01 NDVI₁ - 0.1 YF for a region 'A' of an agriculture field, as per an embodiment of the present invention. NDVI₂ can be seen to be predominantly driven by NDVI₁ and not by YF. This indicates that the crop growth deviation in region 'A' is attributable to a plurality of incidental issues.

Figure 3c illustrates the parameter surfaces 306 of explanatory variable YF as per a regression equation NDVI₂ = 0.4 + 0.1 NDVI₁ + 0.6 YF for a region 'B' of an agriculture field, as per an embodiment of the present invention. In this equation, the local contribution of historical yield frequency can be seen to be comparable to that of NDVI₁ which implies that region 'B' is driven by historical yield performance or a plurality of persistent issues such as soil physical properties, soil compaction, waterlogging, and seed establishment. Various embodiments of the present invention provide a dynamic, automatic data layer weighting for each point taking into account the spatial autocorrelation with its neighbouring points. That means that for a particular cluster or any edge areas, when moved to the next cluster, the influence of the relevant data layer on yield changes and is automatically identified. Thus, it provides a huge degree of scientifically based understanding of which data or factor is having an influence on yield and where those influences are.

It will be appreciated by the informed agronomist or farmer that the present invention is not limited to the use cases described herein. A range of other use cases are possible. For example, in the cases illustrated above, the response variable is NDVI₂ or the most recent NDVI image which is a proxy for current levels of crop growth. Other response variables and corresponding explanatory variables are also envisaged here. The invention is not limited to the detection of poor response to fertilisers but provides a general method for the detection and analysis of any anomalous area in the field e.g. due to slope, elevation, aspect, water logging, pests etc.

In an embodiment of the present invention, a system for delineating a plurality of management zones in an agricultural field for variable rate application is provided. The system comprises a computing device and a non-transitory memory means operably coupled to the computing device. The memory means may be any internal or external device or web-based data storage mechanism adapted to store data. The computing device may be a personal computer, a portable device such as a tablet computer, a laptop, a smart phone, or any operating system based connected portable device.The memory means has a plurality of instructions stored thereon which configures the computing device to identify at least one set of spatially contiguous regions within the field; generate a historical yield frequency map for the set of regions by cascading a plurality of yield maps of the identified set of regions from a plurality of prior consecutive cropping season; combine the yield frequency map with two or more consecutive NDVI maps of the identified set of regions captured over a predetermined timeframe in an ongoing cropping season by applying a multivariate geostatistical model wherein the model has the latest captured NDVI map as the response variable, and the NDVI maps captured prior to the latest captured NDVI map and the yield frequency map as the explanatory variables; identify the parameter surface for each explanatory variable for each region; map crop growth deviation in each region to either of a plurality of persistent issues or a plurality of incidental issues, based on the parameter surface for each explanatory variable for each region; and generate a prescription map for VRA for each region.

The system herein is provided with relevant databases and microservices which call external data sources in real time to operate as follows. A user interface is provided wherein the user may select a field at a particular GPS location. The user may call a yield frequency map which has previously been created and cached to avoid the latency inherent in the pre-processing stage of Yield Frequency map creation. The user may call Python functions (or other languages if refactored) such that a Moran's LISA map may be created delineating area of stable high yield, stable low yield and unstable variable yield. This may then be used to inform nutrient planning.

For use of the system for in-season decision support, through creation of the Spatially Varying Coefficient, the user may then call NDVI images through an API to Sentinel or other satellite data. A feature is provided wherein the level of cloud cover may be set as a filter and then available images at the desired dates selected. Successive NDVI or GCI images may then be combined with any number of data layers in order to create the SVC map. That map may then be used to interrogate and quantify the influence of various factors on the current crop growth observed as follows. A number of potential user interfaces and ways of interacting with the data are possible. Thus in one embodiment of this for example user may hover the mouse over a particular spot on the map or may touch a mobile device screen. The system will then return information on what is mainly driving performance at that point (and similar nearby points). This aspect is not limited to the way in which it is implemented here and may be embodied in a range of different areas. This provides a great deal of value to the farmer or agronomist either in advance of going in-field or actually in field at an anomalous area.

Although the present invention has been described with reference to specific embodiments, this description is not meant to be construed in a limiting sense. Various modifications of the disclosed embodiments, as well as alternate embodiments of the subject matter, will become apparent to persons skilled in the art upon reference to the description of the subject matter. It is therefore contemplated that such modifications can be made without departing from the scope of the appended claims.

Further, a person ordinarily skilled in the art will appreciate that the various illustrative method steps described in connection with the embodiments disclosed herein may be implemented using electronic hardware, or a combination of hardware and software. To clearly illustrate this interchangeability of hardware and a combination of hardware and software, various illustrations and steps have been described above, generally in terms of their functionality. Whether such functionality is implemented in hardware, or a combination of hardware devices and software depends upon the design choice, cost, and the specific use of the component. A user may implement the described functionality in varying ways for each application, but such obvious design choices should not be interpreted as causing a departure from the scope of the present invention, defined by the appended claims.

In the specification, the terms "comprise, comprises, comprised and comprising" or any variation thereof and the terms "include, includes, included and including" or any variation thereof are considered to be totally interchangeable, and they should all be afforded the widest possible interpretation and vice versa.

## Claims

1. A computing device enabled method for conflation of multiple spatial data layers for agricultural crop data and obtaining actionable insights into within field spatial variability, the method comprising the steps of:
a) identifying at least one set of spatially contiguous yield regions within the field;
b) generating a historical yield frequency map for the set of regions identified in step (a), by cascading a plurality of cleaned yield maps of the set of regions from a plurality of prior consecutive cropping seasons;
c) capturing two or more consecutive Normalized Difference Vegetation Index, NDVI, maps of the set of regions identified in step(a), the NDVI maps captured over a predetermined timeframe in an ongoing cropping season;
d) combining the yield frequency map generated in step (b) with the two or more consecutive NDVI maps captured in step (c) by applying a multivariate geostatistical model to generate a clustering image referred to as spatially varying coefficient, SVC, map, the model having the latest captured NDVI map as the response variable, and the NDVI maps captured prior to the latest captured NDVI map, and the yield frequency map generated in step (b) as the explanatory variables, wherein the SVC map includes a plurality of surfaces, each referred to as a point, and wherein the SVC map provides a dynamic, automatic data layer weighting for each point taking into account spatial auto-correlation with neighbouring points, for automatically identifying relative local weightings of each conflated data layer in relation to yield at each point across a field.
e) identifying parameter surface for each explanatory variable for the entire field;
f) optionally combining any other relevant spatial data layer such as field topography, elevation maps, soil texture, soil brightness map, soil moisture map, slope maps, curvature maps, precipitation with the above data layers, to identify areas of interest for management purposes and the relative importance of such data layers in relation to yield; and
g) mapping crop growth deviation in each region of the SVC map to either of a plurality of persistent issues or a plurality of incidental issues, based on the parameter surface for each explanatory variable for each region.

2. The method as claimed in claim 1, further comprising generating a prescription map for variable rate application for the entire field area based on the mapping in step (g).

3. The method as claimed in any preceding claim further comprising generating the historical yield frequency map for delineating spatial yield potential of the field based on a clustering technique, wherein the historical yield frequency map illustrates areas of stable low yield, stable high yield, and unstable variable yield.

4. The method as claimed in claim 1, wherein the multivariate geostatistical model is a Geographically Weighted Regression, GWR, model which accounts for spatial autocorrelation and non-stationarity of variables.

5. The method as claimed in claim 4 wherein the GWR model is used with a fixed bandwidth setting gaussian-shaped spatial kernel and golden-search algorithm.

6. The method as claimed in any preceding claim , further comprising the steps of:
a) removing a plurality of erroneous data points and a plurality of data points proximal to the boundary of the field, from the plurality of yield maps;
b) calculating a normalised yield score for each data point in the yield maps;
c) removing one or more outlier data points with normalised yield score outside of a predetermined threshold value,
d) ordering the data points in the yield maps based on their respective timestamps for removal of temporal outliers; and
e) smoothening and interpolating the data points ordered in step (d) in a uniformly spaced base grid, wherein the grid is defined based on the boundary map of the field.

7. The method as claimed in claim 6, wherein the predetermined threshold value for max-min normalised yield score is three times of the standard deviation (3).

8. The method as claimed in claim 6 or 7, wherein the grid is a (10 x 10) meter (0.01 Ha) square grid.

9. The method as claimed in any preceding claim, wherein the plurality of persistent issues comprises historical soil physical properties, soil compaction, waterlogging, and seed establishment.

10. The method, as claimed in any preceding claim wherein the plurality of near real time in-season issues, comprise non-response to N or other macronutrients, water logging, pest or disease outbreak, spatial variability in crop performance following drought, heat or other extreme weather events or any other events which are yield limiting, seed establishment, canopy growth, responses to Variable Rate Seeding, unexpected spatial variability when employing new varieties.

11. The method as claimed in any preceding claim, wherein the explanatory variable to the model comprises the NDVI maps captured prior to the latest captured NDVI map, the yield frequency map, optionally a plurality of topographic maps, and a plurality of soil texture maps.

12. A system comprising a computing device and a non-transitory memory means operably coupled to the computing device, the memory means having stored thereon a plurality of instructions which configure the computing device to:
identify at least one set of spatially contiguous regions within the field;
generate a historical yield frequency map for the set of regions by cascading a plurality of cleaned yield maps of the identified set of regions from a plurality of prior consecutive cropping seasons;
combine the yield frequency map with two or more consecutive NDVI maps of the identified set of regions captured over a predetermined timeframe in an ongoing cropping season, by applying a multivariate geostatistical model, the model having the latest captured NDVI map as the response variable, and the NDVI maps captured prior to the latest captured NDVI map and the yield frequency map as the explanatory variables, wherein the SVC map includes a plurality of surfaces, each referred to as a point, and wherein the SVC map provides a dynamic, automatic data layer weighting for each point taking into account spatial auto-correlation with neighbouring points, for automatically identifying relative local weightings of each conflated data layer in relation to yield at each point across a field;
identify the parameter surface for each explanatory variable for the entire field, to generate a clustering image referred to as spatially varying coefficient, SVC, map, to identify areas of interest for management purposes and the relative importance of such data layers in relation to yield;
map crop growth deviation in each region to either of a plurality of persistent issues or a plurality of incidental issues, based on the parameter surface for each explanatory variable for each region; and
generate a prescription map for variable rate application for the entire field and/or a prescription map for a particular area in need of additional intervention.

13. The system as claimed in claim 12, wherein the multivariate geostatistical model is a Geographically Weighted Regression, GWR, model which accounts for spatial autocorrelation and non-stationarity of variables.

14. The system as claimed in claim 13, wherein the GWR model is used with a fixed bandwidth setting gaussian-shaped spatial kernel and golden-search algorithm.

15. The system as claimed in any of claims 12 to 14, wherein the plurality of persistent issues comprises soil physical properties, soil compaction, waterlogging, other secular changes in soil properties variable responses to weather, levels of soil organic matter and seed establishment.

## Patentansprüche

1. Auf einer Rechenvorrichtung basierendes Verfahren zur Zusammenführung mehrerer räumlicher Datenschichten für landwirtschaftliche Erntedaten und zur Erlangung umsetzbarer Erkenntnisse über die räumliche Variabilität innerhalb des Feldes, wobei das Verfahren die folgenden Schritte umfasst:
a) Identifizieren von mindestens einem Satz räumlich zusammenhängender Ertragsregionen innerhalb des Feldes;
b) Erzeugen einer historischen Ertragsfrequenzkarte für den in Schritt (a) identifizierten Satz von Regionen durch Kaskadieren einer Vielzahl von bereinigten Ertragskarten des Satzes von Regionen aus einer Vielzahl früherer aufeinanderfolgender Anbausaisons;
c) Erfassen von zwei oder mehr aufeinanderfolgenden normalisierten Differenzvegetationsindex-, NDVI-, Karten des Satzes von in Schritt (a) identifizierten Regionen, wobei die NDVI-Karten über einen vorbestimmten Zeitraum in einer laufenden Anbausaison erfasst werden;
d) Kombinieren der in Schritt (b) erzeugten Ertragsfrequenzkarte mit den zwei oder mehr aufeinanderfolgenden in Schritt (c) erfassten NDVI-Karten durch Anwenden eines multivariaten geostatistischen Modells, um ein Clusterbild zu erzeugen, das als räumlich variierende Koeffizienten-, SVC-, Karte bezeichnet wird, wobei das Modell die zuletzt erfasste NDVI-Karte als Reaktionsvariable und die vor der zuletzt erfassten NDVI-Karte erfassten NDVI-Karten und die in Schritt (b) erzeugte Ertragsfrequenzkarte als erklärende Variablen aufweist, wobei die SVC-Karte eine Vielzahl von Oberflächen einschließt, die jeweils als Punkt bezeichnet werden, und wobei die SVC-Karte eine dynamische, automatische Datenschichtgewichtung für jeden Punkt unter Berücksichtigung der räumlichen Autokorrelation mit benachbarten Punkten zur automatischen Identifizierung relativer lokaler Gewichtungen jeder zusammengeführten Datenschicht in Bezug auf den Ertrag an jedem Punkt über ein Feld bereitstellt;
e) Identifizieren der Parameteroberfläche für jede erklärende Variable für das gesamte Feld;
f) wahlweise Kombinieren jeder anderen relevanten räumlichen Datenschicht wie Feldtopographie, Höhenkarten, Bodenstruktur, Bodenhelligkeitskarte, Bodenfeuchtigkeitskarte, Steigungskarten, Krümmungskarten, Niederschlag mit den oben genannten Datenschichten, zum Identifizieren von Bereichen, die für die Verwaltung von Interesse sind, und der relativen Bedeutung solcher Datenschichten in Bezug auf den Ertrag; und
g) Zuordnen der Abweichung des Pflanzenwachstums in jeder Region der SVC-Karte entweder zu einer Vielzahl von andauernden Problemen oder zu einer Vielzahl von sporadischen Problemen auf der Grundlage der Parameteroberfläche für jede erklärende Variable für jede Region.

2. Verfahren nach Anspruch 1, weiter umfassend das Erzeugen einer Ausbringungskarte für die Anwendung variabler Raten für den gesamten Feldbereich auf der Grundlage der Zuordnung in Schritt (g).

3. Verfahren nach einem vorstehenden Anspruch, das weiter das Erzeugen der historischen Ertragsfrequenzkarte zum Abgrenzen des räumlichen Ertragspotenzials des Feldes auf der Grundlage eines Clustering-Verfahrens umfasst, wobei die historische Ertragsfrequenzkarte Bereiche mit stabilem niedrigem Ertrag, stabilem hohem Ertrag und instabilem variablem Ertrag veranschaulicht.

4. Verfahren nach Anspruch 1, wobei das multivariate geostatistische Modell ein geografisch gewichtetes Regressions-, GWR-, Modell ist, das die räumliche Autokorrelation und Instationarität von Variablen berücksichtigt.

5. Verfahren nach Anspruch 4, wobei das GWR-Modell mit einem gaußförmigen Raumkern mit fester Bandbreiteneinstellung und einem goldenen Suchalgorithmus verwendet wird.

6. Verfahren nach einem vorstehenden Anspruch, weiter umfassend folgende Schritte:
a) Entfernen einer Vielzahl von fehlerhaften Datenpunkten und einer Vielzahl von Datenpunkten, die nahe an der Feldgrenze liegen, aus der Vielzahl von Ertragskarten;
b) Berechnen eines normalisierten Ertragswerts für jeden Datenpunkt in den Ertragskarten;
c) Entfernen eines oder mehrerer Ausreißerdatenpunkte mit normalisiertem Ertragswert außerhalb eines vorbestimmten Schwellenwerts,
d) Sortieren der Datenpunkte in den Ertragskarten auf der Grundlage ihrer jeweiligen Zeitstempel zum Entfernen zeitlicher Ausreißer; und
e) Glätten und Interpolieren der in Schritt (d) sortierten Datenpunkte in einem gleichmäßig beabstandeten Basisraster, wobei das Raster auf der Grundlage der Begrenzungskarte des Feldes definiert ist.

7. Verfahren nach Anspruch 6, wobei der vorbestimmte Schwellenwert für den maximalen-minimalen normalisierten Ertragswert das Dreifache der Standardabweichung (3) beträgt.

8. Verfahren nach Anspruch 6 oder 7, wobei das Raster ein (10 x 10) Meter (0,01 ha) großes quadratisches Raster ist.

9. Verfahren nach einem vorstehenden Anspruch, wobei die Vielzahl andauernder Probleme historische physikalische Bodeneigenschaften, Bodenverdichtung, Wasserstauung und Saatgutetablierung umfasst.

10. Verfahren nach einem vorstehenden Anspruch, wobei die Vielzahl von nahezu in Echtzeit auftretenden saisonalen Problemen eine Nichtreaktion auf N oder andere Makronährstoffe, Staunässe, Schädlings- oder Krankheitsausbruch, räumliche Variabilität der Ernteleistung nach Dürre, Hitze oder anderen extremen Witterungsereignissen oder anderen Ereignissen, die den Ertrag begrenzen, Saatgutetablierung, Wachstum der Pflanzenkrone, Reaktionen auf eine variable Aussaatrate sowie unerwartete räumliche Variabilität beim Einsatz neuer Sorten umfassen.

11. Verfahren nach einem vorstehenden Anspruch, wobei die erklärende Variable für das Modell die vor der zuletzt erfassten NDVI-Karte erfassten NDVI-Karten, die Ertragsfrequenzkarte, wahlweise eine Vielzahl von topografischen Karten und eine Vielzahl von Bodenstrukturkarten umfasst.

12. System, das eine Rechenvorrichtung und einen nicht-transitorischen Speicher umfasst, der betriebsfähig mit der Rechenvorrichtung gekoppelt ist, wobei der Speicher eine Vielzahl von Anweisungen darauf gespeichert hat, die die Rechenvorrichtung für Folgendes ausbilden:
Identifizieren mindestens eines Satzes räumlich zusammenhängender Regionen innerhalb des Feldes;
Erzeugen einer historischen Ertragsfrequenzkarte für den Satz von Regionen durch Kaskadieren einer Vielzahl von bereinigten Ertragskarten des identifizierten Satzes von Regionen aus einer Vielzahl früherer aufeinanderfolgender Anbausaisons;
Kombinieren der Ertragsfrequenzkarte mit zwei oder mehr aufeinanderfolgenden NDVI-Karten des identifizierten Satzes von Regionen, die über einen vorbestimmten Zeitraum in einer laufenden Anbausaison erfasst wurden, durch Anwenden eines multivariaten geostatistischen Modells, wobei das Modell die zuletzt erfasste NDVI-Karte als Reaktionsvariable und die vor der zuletzt erfassten NDVI-Karte erfassten NDVI-Karten und die Ertragsfrequenzkarte als erklärende Variablen aufweist, wobei die SVC-Karte eine Vielzahl von Oberflächen einschließt, die jeweils als ein Punkt bezeichnet werden, und wobei die SVC-Karte eine dynamische, automatische Datenschichtgewichtung für jeden Punkt unter Berücksichtigung der räumlichen Autokorrelation mit benachbarten Punkten zum automatischen Identifizieren relativer lokaler Gewichtungen jeder zusammengeführten Datenschicht in Bezug auf den Ertrag an jedem Punkt über ein Feld bereitstellt;
Identifizieren der Parameteroberfläche für jede erklärende Variable für das gesamte Feld, um ein Clusterbild zu erzeugen, das als räumlich variierende Koeffizienten-, SVC-, Karte bezeichnet wird, zum Identifizieren von Bereichen, die für die Verwaltung von Interesse sind, und der relativen Bedeutung solcher Datenschichten in Bezug auf den Ertrag;
Zuordnen der Abweichung des Pflanzenwachstums in jeder Region entweder zu einer Vielzahl von andauernden Problemen oder zu einer Vielzahl von sporadischen Problemen auf der Grundlage der Parameteroberfläche für jede erklärende Variable für jede Region; und
Erzeugen einer Ausbringungskarte für die Anwendung variabler Raten für das gesamte Feld und/oder einer Ausbringungskarte für einen bestimmten Bereich, der eine zusätzliche Intervention erfordert.

13. System nach Anspruch 12, wobei das multivariate geostatistische Modell ein geografisch gewichtetes Regressions-, GWR-, Modell ist, das die räumliche Autokorrelation und Instationarität von Variablen berücksichtigt.

14. System nach Anspruch 13, wobei das GWR-Modell mit einem gaußförmigen Raumkern mit fester Bandbreiteneinstellung und einem goldenen Suchalgorithmus verwendet wird.

15. System nach einem der Ansprüche 12 bis 14, wobei die Vielzahl andauernder Probleme die physikalischen Eigenschaften des Bodens, Bodenverdichtung, Staunässe, andere säkulare Veränderungen der Bodeneigenschaften, variable Reaktionen auf das Wetter, Niveaus organischer Bodensubstanz und Saatgutetablierung umfasst.

## Revendications

1. Procédé mis en œuvre par un dispositif informatique pour la fusion multisource de plusieurs couches de données spatiales pour des données de culture agricole et l'obtention d'informations exploitables sur la variabilité spatiale dans un champ, le procédé comprenant les étapes suivantes :
a) l'identification d'au moins un ensemble de régions de rendement spatialement contiguës dans le champ ;
b) la génération d'une carte de fréquences de rendement historiques pour l'ensemble de régions identifié à l'étape (a), en dérivant une pluralité de cartes de rendements nettoyées de l'ensemble de régions à partir d'une pluralité de saisons de récolte consécutives précédentes ;
c) la capture de deux cartes consécutives ou plus d'indice de végétation à différence normalisée, NDVI, de l'ensemble de régions identifié à l'étape (a), les cartes de NDVI étant capturées sur une période prédéterminée dans une saison de récolte en cours ;
d) la combinaison de la carte de fréquences de rendement générée à l'étape (b) avec les deux cartes de NDVI consécutives ou plus capturées à l'étape (c) en appliquant un modèle géostatistique multivarié pour générer une image de regroupement appelée carte de coefficients spatialement variables, SVC, le modèle présentant la carte de NDVI capturée en dernier comme variable de réponse, et les cartes de NDVI capturées avant la carte de NDVI capturée en dernier, et la carte de fréquences de rendement générée à l'étape (b) comme variables explicatives,
dans lequel la carte de SVC inclut une pluralité de surfaces, chacune étant désignée comme un point, et dans lequel la carte de SVC fournit une pondération dynamique et automatique de couche de données pour chaque point en tenant compte de l'autocorrélation spatiale avec des points voisins, pour identifier automatiquement des pondérations locales relatives de chaque couche de données à fusion multisource par rapport au rendement au niveau de chaque point dans un champ ;
e) l'identification d'une surface de paramètre pour chaque variable explicative pour l'ensemble du champ ;
f) la combinaison facultative de toute autre couche de données spatiales pertinente telle que la topographie des champs, des cartes d'élévations, la texture du sol, une carte de luminance du sol, une carte de l'humidité du sol, des cartes de pentes, des cartes de courbures, les précipitations avec les couches de données ci-dessus, afin d'identifier des zones d'intérêt à des fins de gestion et l'importance relative de ces couches de données par rapport au rendement ; et
g) la mise en correspondance de l'écart de croissance des cultures dans chaque région de la carte de SVC avec une pluralité de problèmes persistants ou une pluralité de problèmes épisodiques, sur la base de la surface de paramètre pour chaque variable explicative pour chaque région.

2. Procédé selon la revendication 1, comprenant en outre la génération d'une carte de prescription pour une application à taux variable pour l'ensemble de la zone de champ sur la base de la mise en correspondance à l'étape (g).

3. Procédé selon une quelconque revendication précédente comprenant en outre la génération de la carte de fréquences de rendement historiques pour délimiter le potentiel de rendement spatial du champ sur la base d'une technique de regroupement, dans lequel la carte de fréquences de rendement historiques illustre des zones à rendement faible stable, à rendement élevé stable et à rendement variable instable.

4. Procédé selon la revendication 1, dans lequel le modèle géostatistique multivarié est un modèle de régression géographiquement pondérée, GWR, qui tient compte de l'autocorrélation spatiale et de la non-stabilité des variables.

5. Procédé selon la revendication 4, dans lequel le modèle de GWR est utilisé avec un noyau spatial en forme de gaussienne à réglage de largeur de bande fixe et un algorithme de recherche du nombre d'or.

6. Procédé selon une quelconque revendication précédente, comprenant en outre les étapes suivantes :
a) la suppression, à partir de la pluralité de cartes de rendements, d'une pluralité de points de données erronés et d'une pluralité de points de données situés de manière proximale à la limite du champ ;
b) le calcul d'un score de rendement normalisé pour chaque point de données dans les cartes de rendements ;
c) la suppression d'un ou plusieurs points de données à valeur aberrante ayant un score de rendement normalisé en dehors d'une valeur seuil prédéterminée,
d) l'ordonnancement des points de données dans les cartes de rendements sur la base de leurs estampilles temporelles respectives pour la suppression de valeurs aberrantes temporelles ; et
e) le lissage et l'interpolation des points de données ordonnés à l'étape (d) dans une grille de base uniformément espacée, dans lequel la grille est définie sur la base de la carte de limites du champ.

7. Procédé selon la revendication 6, dans lequel la valeur seuil prédéterminée pour le score de rendement normalisé max-min est trois fois l'écart-type (3).

8. Procédé selon la revendication 6 ou la revendication 7, dans lequel la grille est une grille carrée de (10 x 10) mètres (0,01 ha).

9. Procédé selon une quelconque revendication précédente, dans lequel la pluralité de problèmes persistants comprend des propriétés physiques historiques du sol, le tassement du sol, l'engorgement et l'établissement des semences.

10. Procédé, selon une quelconque revendication précédente, dans lequel la pluralité de problèmes quasiment en temps réel pendant la saison comprennent la non-réponse à N ou à d'autres macronutriments, l'engorgement, une épidémie de nuisibles ou de maladies, la variabilité spatiale des performances des cultures suite à une sécheresse, à la chaleur ou à d'autres événements météorologiques extrêmes ou à tout autre événement limitant le rendement, ainsi que l'établissement des semences, la croissance de la partie supérieure des plantes, des réponses à un ensemencement à taux variable, une variabilité spatiale inattendue lors de l'emploi de nouvelles variétés.

11. Procédé selon une quelconque revendication précédente, dans lequel la variable explicative du modèle comprend les cartes de NDVI capturées avant la carte de NDVI capturée en dernier, la carte de fréquences de rendement, facultativement une pluralité de cartes topographiques et une pluralité de cartes de textures du sol.

12. Système comprenant un dispositif informatique et un moyen de mémoire non transitoire couplé fonctionnellement au dispositif informatique, le moyen de mémoire présentant, stockées sur celui-ci, une pluralité d'instructions qui configurent le dispositif informatique pour : identifier au moins un ensemble de régions spatialement contiguës dans le champ ;
générer une carte de fréquences de rendement historiques pour l'ensemble de régions en dérivant une pluralité de cartes de rendements nettoyées de l'ensemble identifié de régions à partir d'une pluralité de saisons de récolte consécutives précédentes ;
combiner la carte de fréquences de rendement avec deux cartes de NDVI consécutives ou plus de l'ensemble identifié de régions capturées sur une période prédéterminée dans une saison de récolte en cours, en appliquant un modèle géostatistique multivarié, le modèle présentant la carte de NDVI capturée en dernier comme variable de réponse, et les cartes de NDVI capturées avant la carte de NDVI capturée en dernier et la carte de fréquences de rendement en tant que variables explicatives, dans lequel la carte de SVC inclut une pluralité de surfaces, chacune étant désignée comme un point, et dans lequel la carte de SVC fournit une pondération dynamique et automatique de couche de données pour chaque point en tenant compte de l'autocorrélation spatiale avec des points voisins, pour identifier automatiquement des pondérations locales relatives de chaque couche de données à fusion multisource par rapport au rendement au niveau de chaque point dans un champ ;
identifier la surface de paramètre pour chaque variable explicative pour l'ensemble du champ, pour générer une image de regroupement appelée carte de coefficients spatialement variables, SVC, afin d'identifier des zones d'intérêt à des fins de gestion et l'importance relative de ces couches de données par rapport au rendement ;
mettre en correspondance l'écart de croissance des cultures dans chaque région avec une pluralité de problèmes persistants ou une pluralité de problèmes épisodiques, sur la base de la surface de paramètre pour chaque variable explicative pour chaque région ;
et générer une carte de prescription pour une application à taux variable pour l'ensemble du champ et/ou une carte de prescription pour une zone particulière nécessitant une intervention supplémentaire.

13. Système selon la revendication 12, dans lequel le modèle géostatistique multivarié est un modèle de régression géographiquement pondérée, GWR, qui tient compte de l'autocorrélation spatiale et de la non-stabilité des variables.

14. Système selon la revendication 13, dans lequel le modèle de GWR est utilisé avec un noyau spatial en forme de gaussienne à réglage de largeur de bande fixe et un algorithme de recherche du nombre d'or.

15. Système selon l'une quelconque des revendications 12 à 14, dans lequel la pluralité de problèmes persistants comprend des propriétés physiques du sol, le compactage du sol, l'engorgement, d'autres changements à long terme des propriétés du sol, des réponses variables aux conditions météorologiques, des niveaux de matière organique du sol et l'établissement de semences.
